Europäisches Patentamt

European Patent Office

Office européen des brevets

(19)

(11) EP 1 211 836 A1

(12) EUROPEAN PATENT APPLICATION
published in accordance with Art. 158(3) EPC

(43) Date of publication:
05.06.2002 Bulletin 2002/23

(51) Int Cl.⁷: H04J 11/00

(21) Application number: 01956925.0

(22) Date of filing: 16.08.2001

(86) International application number:
PCT/JP01/07066

(87) International publication number:
WO 02/17530 (28.02.2002 Gazette 2002/09)

(84) Designated Contracting States:
AT BE CH CY DE DK ES FI FR GB GR IE IT LI LU
MC NL PT SE TR

(30) Priority: 18.08.2000 JP 2000248099

(71) Applicant: MITSUBISHI DENKI KABUSHIKI
KAISHA
Tokyo 100-8310 (JP)

(72) Inventor: MATSUMOTO, Wataru,
Mitsubishi Denki K. K.
Tokyo 100-8210 (JP)

(74) Representative: Pfenning, Meinig & Partner
Mozartstrasse 17
80336 München (DE)

(54) COMMUNICATION DEVICE AND COMMUNICATION METHOD

(57) A transmitter section converts a transmission symbol to a half symbol and conducts communication in such a state that a predetermined power difference is given between even-numbered subcarriers and odd-numbered subcarriers. A receiver section conducts Fourier transform on a received symbol, demodulates data assigned to the subcarriers, on the other hand, conducts inverse Fourier transform on the demodulated data, generates a first symbol corresponding to even-numbered subcarriers, removes the first symbol component from the received symbol, generates a second symbol corresponding to odd-numbered subcarriers, conducts Fourier transform on the second symbol, and demodulates data assigned to the subcarriers.

FIG.1

**Description**

TECHNICAL FIELD

The present invention relates to a communication apparatus in which a multicarrier modulation and demodulation technique is adopted. More particularly, this invention relates to the method of and the apparatus for communication which makes it possible to implement data communication using an existing communication line by means of the DMT (Discrete Multi Tone) modulation and demodulation technique or the OFDM (Orthogonal Frequency Division Multiplex) modulation and demodulation technique. However, the present invention can be applied not only to communication apparatuses which conduct data communication by means of the DMT modulation and demodulation technique, but also to all the communication apparatuses which conduct wire communication and radio communication via ordinary communication lines by using the multicarrier modulation and demodulation technique and the single modulation and demodulation technique.

BACKGROUND ART

Operation of a conventional communication apparatus will be explained below. First, operation of a transmitter system of the conventional communication apparatus in which the OFDM modulation and demodulation technique is adopted as the multicarrier modulation and demodulation technique will now be explained briefly. For example, when data communication using the OFDM modulation and demodulation technique is conducted, the transmitter system conducts tone ordering processing, i.e., processing of assigning transmission data having a number of bits which can be transmitted to a plurality of tones (multicarrier) in a preset frequency band. More specifically, the transmitter system assigns transmission data having a predetermined number of bits to tone 0 to tone X (where X is an integer which indicates the number of tones). By conducting the tone ordering processing and encoding processing, transmission data are multiplexed every frame.

In addition, the transmitter system conducts inverse. fast Fourier transform (IFFT) on the multiplexed transmission data, converts parallel data obtained by the inverse fast Fourier transform to serial data, then converts a digital waveform to an analog waveform by using a D/A converter, finally conducts low-pass filtering on the analog waveform, and transmits the transmission data to a transmission line.

Operation of a receiver system of the conventional communication apparatus in which the OFDM modulation and demodulation technique is adopted as the multicarrier modulation and demodulation technique will now be explained briefly. When data communication using the OFDM modulation and demodulation technique is conducted in the same way as the foregoing description, the receiver system conducts low-pass filtering on received data (the aforementioned transmission data), then converts its analog waveform to a digital waveform by using an A/D converter, and conducts time domain adaptive equalization processing by using a time domain equalizer.

In addition, the receiver system converts serial data obtained by the time domain adaptive equalization processing to parallel data, conducts fast Fourier transform on the parallel data, and then conducts frequency domain adaptive equalization processing by using a frequency domain equalizer.

Data obtained by the frequency domain adaptive equalization processing is converted to serial data by composite processing (most likely composite method) and tone ordering processing. Thereafter, processing such as rate conversion processing, FEC (forward error correction), descrambling processing, and CRC (cyclic redundancy check) is conducted. Finally, the transmission data is reproduced.

In this way, in the conventional communication apparatus in which the OFDM modulation and demodulation technique is adopted, high rate communication is made possible by utilizing a high transmission efficiency and high function flexibility, which cannot be obtained when using the CDMA or the single carrier modulation and demodulation technique.

However, the conventional communication apparatus in which the OFDM modulation and demodulation technique is adopted has a problem that there is room for improvement in the configuration of the transmitter system and the receiver system from a viewpoint of "further increase of the transmission rate" and that it cannot be said that "a high transmission efficiency" and "function flexibility" are utilized to the utmost and an optimum transmission rate is accomplished.

It is an object of the present invention to provide a method of and apparatus for communication, in which further improvement of the transmission rate can be accomplished by implementation of conversion to half symbols in the multicarrier modulation and demodulation technique.

DISCLOSURE OF THE INVENTION

The communication apparatus according to one aspect of the present invention adapts a multicarrier modulation and demodulation technique. This communication apparatus comprises a transmitter unit which converts a transmission symbol to a half symbol and conducts communication in such a state that a predetermined power difference is given between even-numbered subcarriers and odd-numbered subcarriers which is interference components at time of demodulation. This communication apparatus further comprises a receiver unit which conducts predetermined Fourier transform to extract even-numbered subcarriers on a received symbol converted to the half symbol, and demodulates data assigned to the subcarriers, which, on the other hand, conducts inverse Fourier transform on the data assigned to the even-numbered subcarriers, and generates a first symbol formed of temporal waveforms of the even-numbered subcarriers, which subsequently removes the first symbol component from the received symbol, generates a second symbol formed of temporal waveforms of odd-numbered subcarriers, and generates a third symbol by adding a symbol obtained by copying and inverting the second symbol, after the second symbol, and which finally conducts predetermined Fourier transform to extract odd-numbered subcarriers on the third symbol, and demodulates data assigned to the subcarriers.

In the above-mentioned communication apparatus, the receiver unit conducts inverse Fourier transform on data assigned to the odd-numbered subcarriers, generates a fourth symbol formed of temporal waveforms of odd-numbered subcarriers, then removes the fourth symbol component from the received symbol, and thereafter conducts demodulation processing by using the received symbol with the fourth symbol component removed.

In the above-mentioned communication apparatus, the transmitter unit spreads (multiplexes) transmission data assigned to a (2i-1) th subcarrier and a 2ith subcarrier which are adjacent to each other, with a predetermined spreading code, conducts inverse Fourier transform on the signal subjected to the spreading, and thereby generates the transmission symbol, and the receiver unit despreads (demultiplexes) the demodulated data with the spreading code, and reproduces original transmission data assigned to the (2i-1)th subcarrier and the 2ith subcarrier which are adjacent to each other.

The communication apparatus according to still another aspect of this invention functions as a transmitter in which a multicarrier modulation and demodulation technique is adopted. This communication apparatus comprises a transmitter unit which converts a transmission symbol to a half symbol and conducts communication in such a state that a predetermined power difference is given between even-numbered subcarriers and odd-numbered subcarriers which is interference components at time of demodulation.

The above-mentioned communication apparatus further comprises a multiplexing unit which spreads (multiplexes) transmission data assigned to a (2i-1)th subcarrier and a 2ith subcarrier which are adjacent to each other, with a predetermined spreading code. Moreover, the transmitter unit conducts inverse Fourier transform on the signal subjected to the spreading, and thereby generates the transmission symbol.

The communication apparatus according to still another aspect of this invention functions as a receiver in which a multicarrier modulation and demodulation technique is adopted. The communication apparatus comprises, a first demodulation unit (which corresponds to a TEQ2, a 128 complex FFT 3, an FEQ 4, and a decoder 5) which conducts predetermined Fourier transform to extract even-numbered subcarriers on a received symbol converted to the half symbol, and demodulates data assigned to the subcarriers, a first symbol generation unit (which corresponds to an inverse FEQ transform section 6, a 128 complex IFFT 7, and an inverse TEQ transform section 8) which conducts inverse Fourier transform on the data assigned to the even-numbered subcarriers, and generates a first symbol formed of temporal waveforms of the even-numbered subcarriers, a second symbol generation unit (which corresponds to a subtracter 9) which removes the first symbol component from the received symbol, and generates a second symbol formed of temporal waveforms of odd-numbered subcarriers, a third symbol generation unit (which corresponds to a symbol generation section 10) which generates a third symbol by adding a symbol obtained by copying and inverting the second symbol, after the second symbol, and a second demodulation unit (which corresponds to a TEQ 11, a 256 complex FFT 12, an FEQ 13, and a decoder 14) which conducts predetermined Fourier transform to extract odd-numbered subcarriers on the third symbol, and demodulates data assigned to the subcarriers.

The above-mentioned communication apparatus further comprises, a fourth symbol generation unit (which corresponds to an inverse FEQ transform section 15, a 256 complex IFFT 16, and an inverse TEQ transform section 17) which conducts inverse Fourier transform on data assigned to the odd-numbered subcarriers, and generates a fourth symbol formed of temporal waveforms of odd-numbered subcarriers, and a removal unit (which corresponds to a subtracter 1) which removes the fourth symbol component from the received symbol. Thereafter, a demodulation processing is conducted by using the received symbol with the fourth symbol component removed.

The above-mentioned communication apparatus further comprises a demultiplexing unit (which corresponds to a demultiplexing section 74) which despreads (demultiplexes) the demodulated data, and reproduces original transmission data assigned to the (2i-1)th subcarrier and the 2ith subcarrier which are adjacent to each other.

The communication method according to still another aspect of this invention comprises, a transmission step which converts a transmission symbol to a half symbol and conducts communication in such a state that a predetermined power difference is given between even-numbered subcarriers and odd-numbered subcarriers which is interference components at time of demodulation, a first demodulation step which conducts predetermined Fourier transform to extract even-numbered subcarriers on a received symbol converted to the half symbol, and demodulates data assigned to the subcarriers, a first symbol generation step which conducts inverse Fourier transform on the data assigned to the even-numbered subcarriers, and generates a first symbol formed of temporal waveforms of the even-numbered subcarriers, a second symbol generation step which removes the first symbol component from the received symbol, and generates a second symbol formed of temporal waveforms of odd-numbered subcarriers, a third symbol generation step which generates a third symbol by adding a symbol obtained by copying and inverting the second symbol, after the second symbol, and a second demodulation unit which conducts predetermined Fourier transform to extract odd-numbered subcarriers on the third symbol, and demodulates data assigned to the subcarriers.

The above-mentioned communication method further comprises, a fourth symbol generation step which conducts inverse Fourier transform on data assigned to the odd-numbered subcarriers, and generates a fourth symbol formed of temporal waveforms of odd-numbered subcarriers, and a removal step which removes the fourth symbol component from the received symbol, and thereafter demodulation processing is conducted by using the received symbol with the fourth symbol component removed.

The above-mentioned communication method further comprises, a multiplexing step which spreads (multiplexes) transmission data assigned to a (2i-1)th subcarrier and a 2ith subcarrier which are adjacent to each other, with a predetermined spreading code, conducts inverse Fourier transform on the signal subjected to the spreading, and thereby generates the transmission symbol, and a demultiplexing step which despreads (demultiplexes) the demodulated data with the spreading code, and reproduces original transmission data assigned to the (2i-1)th subcarrier and the 2ith subcarrier which are adjacent to each other.

BRIEF DESCRIPTION OF THE DRAWINGS

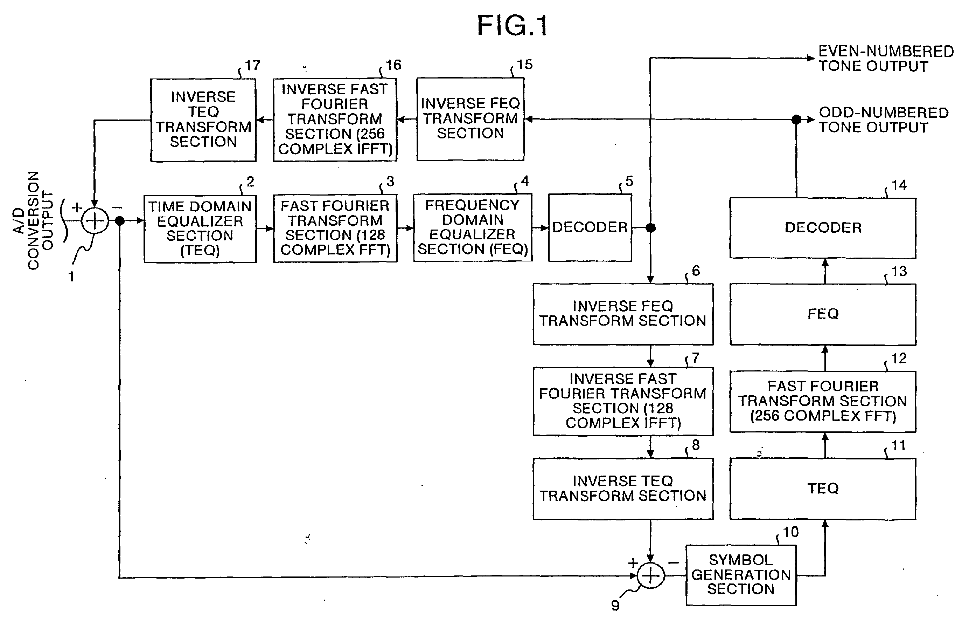

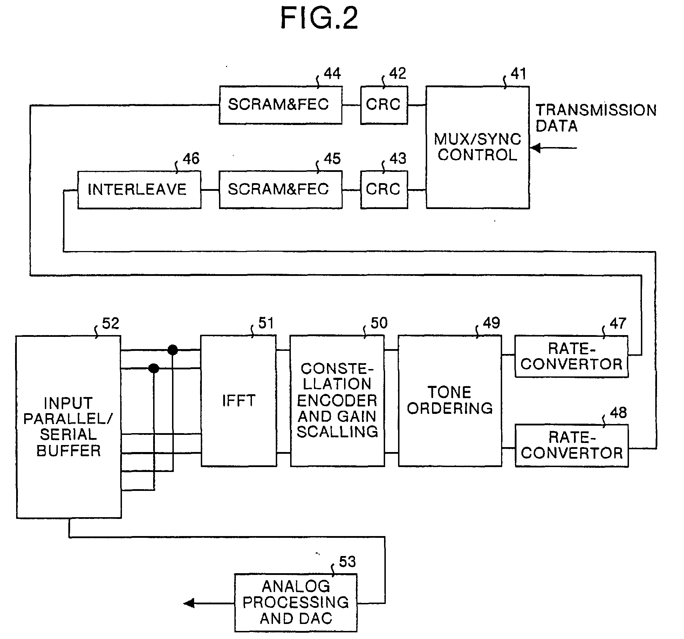

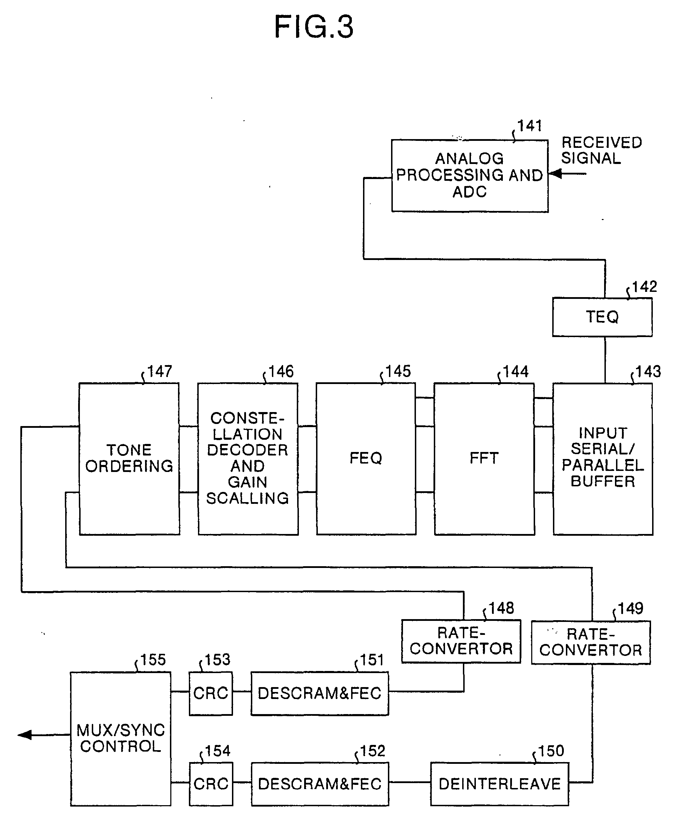

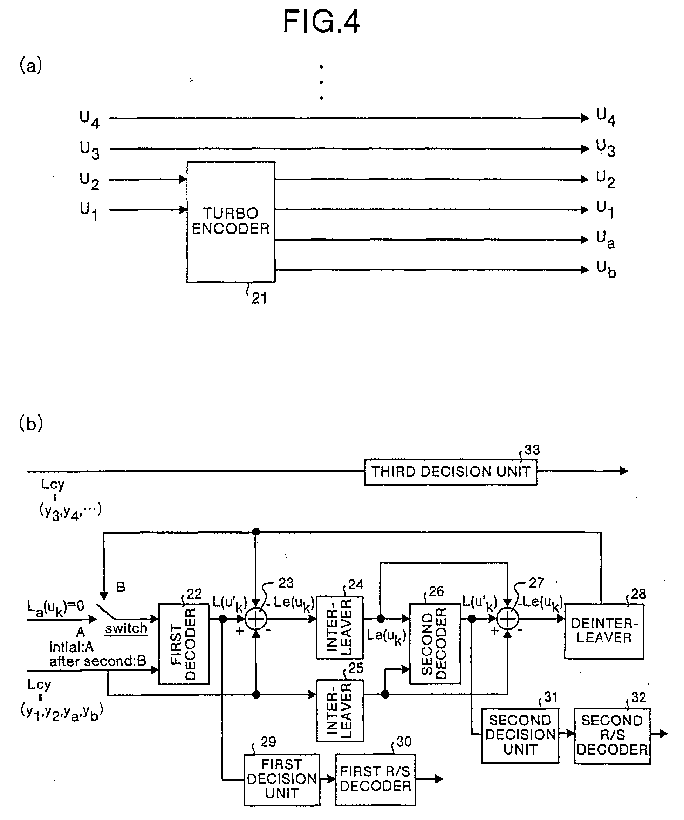

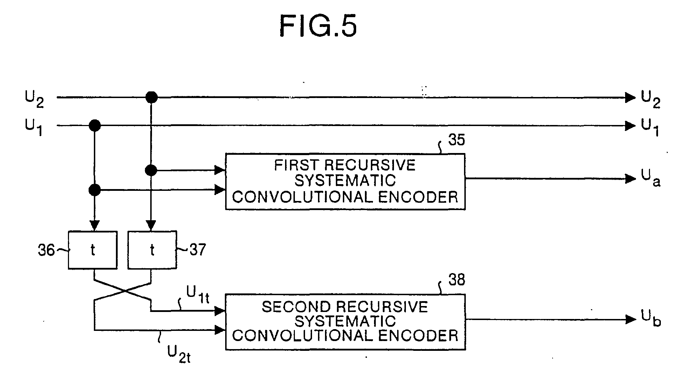

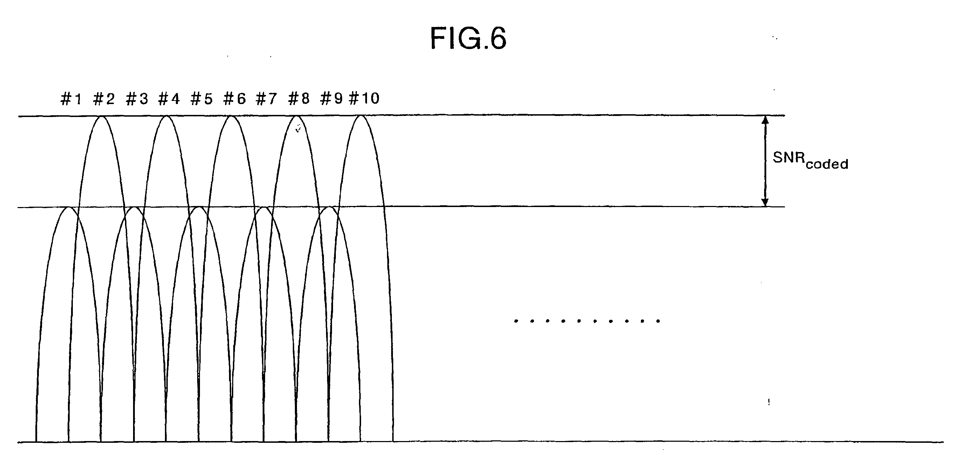

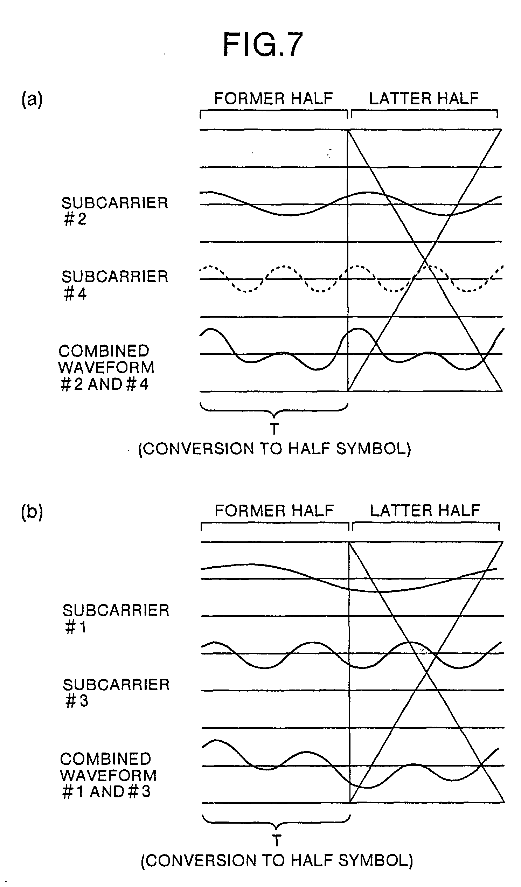

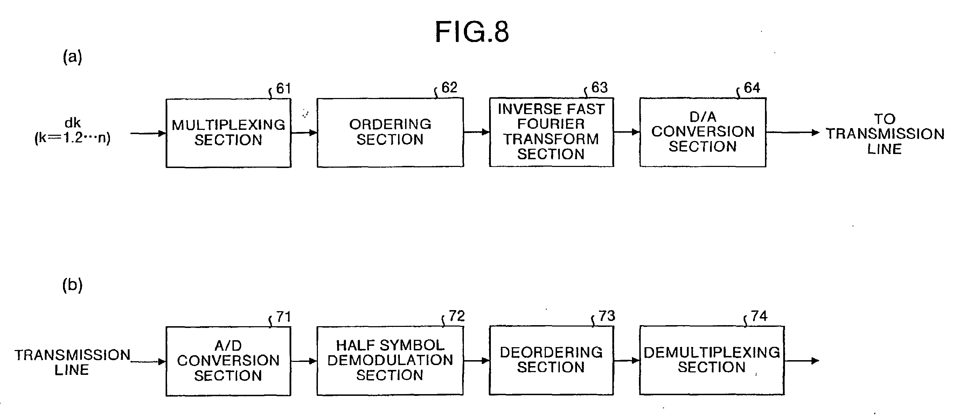

Fig. 1 is a diagram showing a configuration of a first embodiment of a communication apparatus according to the present invention; Fig. 2 is a diagram showing a general configuration example of a transmitter system of a communication apparatus in which a DMT modulation and demodulation technique is adopted; Fig. 3 is a diagram showing a general configuration example of a receiver system of a communication apparatus in which the DMT modulation and demodulation technique is adopted; Fig. 4 is a diagram showing configurations of an encoder and a decoder used in a communication apparatus according to the present invention; Fig. 5 is a diagram showing a configuration example of a turbo encoder; Fig. 6 is a diagram showing 128 subcarriers; Fig. 7 is a diagram showing waveforms of respective subcarriers and a waveform obtained by combining them; and Fig. 8 is a diagram showing a second embodiment of a communication apparatus according to the present invention.

BEST MODE FOR CARRYING OUT THE INVENTION

Embodiments of a method of and apparatus for communication according to the present invention will be explained in detail below by referring to the accompanying drawings. The present invention is not restricted by the embodiments.

First Embodiment:

Fig. 1 is a diagram showing a configuration of a first embodiment of a communication apparatus according to the present invention. More specifically, Fig. 1 is a diagram showing a configuration of a receiver side which is a feature of the present embodiment.

A communication apparatus according to the present embodiment has configurations of both the transmitter side and the receiver side. In addition, since the communication apparatus has a data error correction capability of high precision owing to a turbo encoder and a turbo decoder, an excellent transmission characteristic is obtained in data communication and audio communication. For convenience of explanation, it is assumed that the present embodiment has both configurations. For example, however, a transmitter having only the configuration of the transmitter side may be supposed. On the other hand, a receiver having only the configuration of the receiver side may be supposed.

For example, in the configuration of the receiver side of Fig. 1, reference numeral 1 denotes a subtracter, 2 denotes a time domain equalizer section (TEQ), 3 denotes a fast Fourier transform section (128 complex FFT) which extracts, for example, only 64 even-numbered subcarriers from among 128 subcarriers, 4 denotes a frequency domain equalizer section (FEQ), 5 denotes a decoder which decodes even-numbered subcarriers, 6 denotes an inverse FEQ transform section, 7 denotes an inverse fast Fourier transform section (128 complex IFFT) which performs inverse fast Fourier transform on 64 even-numbered subcarriers, 8 denotes an inverse TEQ transform section, 9 denotes a subtracter, 10 denotes a symbol generator section, 11 denotes a TEQ, 12 denotes a fast Fourier transform section (256 complex FFT) which extracts, for example, 64 odd-numbered subcarriers, 13 denotes an FEQ, 14 denotes a decoder, 15 denotes an inverse FEQ transform section, 16 denotes an inverse fast Fourier transform section (256 complex IFFT) which performs inverse fast Fourier transform on 64 odd-numbered subcarriers, and 17 denotes an inverse TEQ transform section.

Prior to explanation of operation of the transmitter side and operation of the receiver side which are a feature of the present invention, basic operation of a communication apparatus according to the present invention will be explained simply by referring to the drawing. For example, as a wire digital communication technique in which the DMT (Discrete Multi Tone) modulation and demodulation technique is adopted as the multicarrier modulation and demodulation technique, there is an xDSL communication technique such as an ADSL (Asymmetric Digital Subscriber Line) communication technique whereby fast digital communication of several megabits/second is conducted by using an existing telephone line, and an HDSL (high-bit-rate Digital Subscriber Line) communication technique. This technique is standardized in T1.413 of the ANSI and so on.

Fig. 2 is a diagram showing a general configuration example of a transmitter system of a communication apparatus in which the DMT modulation and demodulation technique is adopted. With reference to Fig. 2, in the transmitter system, transmission data are multiplexed by a multiplex/sync control (which corresponds to illustrated MUX/SYNC CONTROL) 41. Error detection codes are added to the multiplexed transmission data in cyclic redundancy check (which corresponds to CRC) 42 and 43. In addition, addition of FEC codes and scramble processing are conducted in forward error correction (which correspond to SCRAM&FEC) 44 and 45.

Between the multiplex/sync control 41 and a tone ordering 49, there are two paths. One of them is an interleaved data buffer path, which includes an interleave (INTERLEAVE) 46. The other of them is a fast data buffer path, which does not include the interleave. The interleaved data buffer path, on which the interleave processing is conducted, caused a longer delay.

Thereafter, the transmission data is subject to rate conversion processing in rate converters (which correspond to RATE-CONVERTOR's) 47 and 48, and subject to tone ordering processing in a tone ordering (which corresponds to TONE ORDERING) 49. On the basis of the transmission data subjected to the tone ordering processing, constellation data is created (turbo decoding is included) in a constellation encoder/gain scaling (which corresponds to CONSTELLATION ENCODER AND GAIN SCALING) 50. Inverse fast Fourier transform is conducted in an inverse fast Fourier transform section (which corresponds to IFFT) 51.

Finally, parallel data subjected to Fourier transform is converted to serial data in an input parallel/serial buffer (which corresponds to INPUT PARALLEL/SERIAL BUFFER) 52. A digital waveform is converted an analog waveform in an analog processing/digital-analog converter (which corresponds to ANALOG PROCESSING AND DAC) 53. After filtering processing has been executed, the transmission data is transmitted to a telephone line.

Fig. 3 is a diagram showing a general configuration example of a receiver system of a communication apparatus in which the DMT modulation and demodulation technique is adopted. With reference to Fig. 3, in the receiver system, filtering processing is conducted on received data (the aforementioned transmission data) and then an analog waveform is converted to a digital waveform in an analog processing/analog-digital converter (which corresponds to ANALOG PROCESSING AND ADC) 141. Time domain adaptive equalization processing is conducted in a time domain equalizer (which corresponds to TEQ) 142.

As for the data subjected to execution of the time domain adaptive equalization processing, serial data is converted to parallel data in an input serial/parallel buffer (which corresponds to INPUT SERIAL/PARALLEL BUFFER) 143. The parallel data is subject to fast Fourier transform in a fast Fourier transform section (which corresponds to FFT) 144. Thereafter, frequency domain adaptive equalization processing is conducted in a frequency domain equalizer (which corresponds to FEQ) 145.

The data subjected to execution of the frequency domain adaptive equalization processing is converted to serial data by decoding processing (turbo decoding) and tone ordering processing conducted in a constellation decoder/gain scaling (which corresponds to CONSTELLATION DECODER AND GAIN SCALING) 146 and a tone ordering (which corresponds to TONE ORDERING) 147. Thereafter, there is conducted processing such as rate conversion processing in rate converters (which correspond to RATE-CONVERTER's) 148 and 149, deinterleave processing in a deinterleave section (which corresponds to DEINTERLEAVE) 150, FEC processing and descramble processing in forward error correction sections (which correspond to DESCRAM&FEC's) 151 and 152, and cyclic redundancy check ( (which correspond to CRC's) 153 and 154. Finally, received data is reproduced from a multiplex/sync control section (which corresponds to MUX/SYNC CONTROL) 155.

In the communication apparatus explained above, each of the receiver system and the transmitter system has two paths. By using properly the two paths or activating the two paths simultaneously, data communication with a reduced transmission delay and a high rate can be accomplished.

For convenience of explanation, the operation of the wire digital communication technique in which the DMT modulation and demodulation technique is adopted as the multicarrier modulation and demodulation technique has been explained. However, this is not restrictive. This configuration can be applied to all communication apparatuses which conduct wire communication and radio communication by using the multicarrier modulation and demodulation technique (for example, the OFDM modulation and demodulation technique). Further, the communication apparatus in which the turbo code is adopted for the encoding processing has been described. However, this is not restrictive. For example, the known convolutional code may be adopted. In the present embodiment, the time domain equalizer 142 corresponds to the TEQ 2 of Fig. 1. The input serial/parallel buffer 143 and the fast Fourier transform section 144 correspond to the 128 complex FFT 3 of Fig. 1. The frequency domain equalizer 145 corresponds to the FEQ 4 of Fig. 1. The subsequent circuit corresponds to the decoder 5.

Hereafter, operation of an encoder (transmitter system) and a decoder (receiver system) in the communication apparatus in which the multicarrier modulation and demodulation technique is adopted will be explained by referring to the drawing. Fig. 4 is a diagram showing configurations of the encoder (turbo encoder) and the decoder (a combination of a turbo decoder, a complex decision unit, and an R/S (Reed-Solomon code) decoder) . More specifically, Fig. 4(a) is a diagram showing the configuration of the encoder in the present embodiment, and Fig. 4(b) is a diagram showing the configuration of the decoder in the present embodiment.

For example, in the encoder of Fig. 4(a), 21 denotes a turbo encoder capable of providing performance which is near the Shannon's limit owing to the adoption of a turbo code as an error correction code. For example, the turbo encoder 21 outputs information bits of 2 bits and redundancy bits of 2 bits in response to information bits of 2 bits. Here, respective redundancy bits are generated so that correction capabilities for respective information bits will become uniform on the receiver side.

On the other hand, in the decoder of Fig. 4(b), 22 denotes a first decoder which calculates a logarithmic likelihood ratio from a received signal Lcy (which corresponds to received signals $y_2$, $y_1$, $y_a$ explained later), 23 and 27 adders, 24 and 25 interleavers, 26 a second decoder which calculates a logarithmic likelihood ratio from a received signal Lcy (which corresponds to received signals $y_2$, $y_1$, $y_a$ explained later), 28 a deinterleaver, 29 a first decision unit which makes a decision on an output of the first decoder 22 and outputs an estimated value of an original information bit sequence, 30 a first R/S decoder which decodes a Reed-Solomon code and outputs an information bit sequence having a higher precision, 31 a second decision unit which makes a decision on an output of the second decoder 26 and outputs an estimated value of an original information bit sequence, 32 a second R/S decoder which decodes a Reed-Solomon code and outputs an information bit sequence having a higher precision, and 33 a third decision unit which makes a complex decision on Lcy (which corresponds to received signals $y_3$, $y_4$, ... explained later).

First, operation of the encoder shown in Fig. 4(a) will be explained. In the present embodiment, for example, the 16 QAM technique is adopted as quadrature amplitude modulation (QAM) . In the encoder of the present embodiment, turbo encoding is carried out only for input data of two low-order bits, and input data of the remaining high-order bits is output as it is. In other words, in the present embodiment, turbo encoding having an excellent error correction capability is carried out for two low-order bits of four signal points having a possibility of being degraded in characteristics (i.e., four points which are nearest in distance between signal points), and a soft decision is made on the receiver side. On the other hand, the remaining high-order bits which are low in possibility of being degraded in characteristics are output as is, and a complex decision is made on the receiver side.

Subsequently, an example of operation of the turbo encoder 21 shown in Fig. 4(a), which carries out turbo encoding for input transmission data $u_1$ and $u_2$ of the two low-order bits, will now be explained. For example, Fig. 5 is a diagram showing a configuration example of the turbo encoder 21. It is now assumed that a known recursive systematic convolutional encoder is used as a configuration of a recursive systematic convolutional encoder.

In Fig. 5, 35 denotes a first recursive systematic convolutional encoder which conducts convolutional encoding on transmission data $u_1$ and $u_2$ corresponding to the information bit sequence and outputs redundancy data $u_a$, 36 and 37 denote interleavers, 38 denotes a second recursive systematic convolutional encoder which conducts convolutional encoding on data $u_{1t}$ and $u_{2t}$ subjected to interleave processing and outputs redundancy data $u_b$. At the same time, the turbo encoder 21 outputs the transmission data $u_1$ and $u_2$, the redundancy data $u_a$ obtained by encoding the transmission data $u_1$ and $u_2$ in the processing of the first recursive systematic convolutional encoder 35, and the redundancy data $u_b$ (which differs from other data in time) obtained by encoding the data $u_{1t}$ and $u_{2t}$ resulting from interleave processing, in the processing of the second recursive systematic convolutional encoder 38.

In the turbo encoder 21, occurrence of an offset in weights of redundancy bits is prevented so that precision of estimation of the transmission data $u_1$ and $u_2$ conducted on the receiver side by using the redundancy data $u_a$ and $u_b$ may become uniform.

If the encoder shown in Fig. 4(a) is used, it thus becomes possible to improve an error correction capability for a burst data error as an effect of the interleaving. In addition, by interchanging the input of the sequence of the transmission data $u_1$ and the input of the sequence of the transmission data $u_2$ between the first recursive systematic convolutional encoder 35 and the second recursive systematic convolutional encoder 38. As a result, it becomes possible to make uniform the precision of estimation of the transmission data $u_1$ and $u_2$ conducted on the receiver side.

Operation of the decoder shown in Fig. 4(b) will now be explained. In the present embodiment, if, for example, the 16 QAM technique is adopted as quadrature amplitude modulation (QAM) will be explained. In the decoder of the present embodiment, turbo decoding is carried out for two low-order bits of the received data, and the original transmission data is estimated by using a soft decision. About the remaining high-order bits, the original transmission data is estimated by making a complex decision on the received data in the third decision unit 33. A received signal Lcy ($y_4$, $y_3$, $y_2$, $y_1$, $y_a$, and $y_b$) is a signal obtained by exerting influences of noise and fading of the transmission path on the outputs $u_4$, $u_3$, $u_2$, $u_1$, $u_a$ and $u_b$ of the transmitter side.

First, in the turbo decoder which has received the received signal Lcy ($y_2$, $y_1$, $y_a$, and $y_b$), the first decoder 22 extracts the received signal Lcy ($y_2$, $y_1$, and $y_a$,), and calculates logarithmic likelihood ratios $L(u_{1k}')$ and $L(u_{2k}')$ respectively of information bits (which correspond to the original transmission data $u_{1k}$ and $u_{2k}$) $u_{1k}'$ and $u_{2k}'$ estimated from these received signals (where k represents time). In other words, the ratio of the probability of $u_{2k}$ being 0 to the probability of $u_{2k}$ being 1, and the ratio of the probability of $u_{1k}$ being 0 to the probability of $u_{1k}$ being 1 are derived. In the ensuing explanation, $u_{1k}$ and $u_{2k}$ are referred to simply as $u_k$, and $u_{1k}'$ and $u_{2k}'$ are referred to simply as $u_k'$.

In Fig. 4(b), Le ($u_k$) represents external information, and La($u_k$) represents anterior information which is immediately preceding information. As the decoder which calculates the logarithmic likelihood ratio, for example, a known maximum a-posterior probability decoder (MAP algorithm) is used in many cases. For example, however, a known Viterbi decoder may also be used.

Subsequently, the adder 23 calculates the external information Le($u_k$) for the second decoder 26 from the logarithmic likelihood ratio which is the result of calculation. In decoding of the first time, however, the anterior information is not derived, and consequently La($u_k$) =0.

Subsequently, in the interleavers 24 and 25, signal rearrangement is conducted for the received signal Lcy and the external information Le($u_k$). In the second decoder 26, the logarithmic likelihood ratio $L(u_k')$ is calculated on the basis of the received signal Lcy and the anterior information La($u_k$) calculated previously, in the same way as the first decoder 22.

Thereafter, in the adder 27, the external information Le($u_k$) is calculated in the same way as the adder 23. At this time, the external information rearranged in the deinterleaver 28 is fed back to the first decoder 22 as the anterior information La($u_k$).

In the turbo decoder, a logarithmic likelihood ratio having a higher precision is calculated by repetitively executing the processing explained above a predetermined number of times (the number of times of iteration). And the first decision unit 29 and the second decision unit 31 make a decision on the signal on the basis of the logarithmic likelihood ratio, and estimate the original transmission data. More specifically, for example, if the logarithmic likelihood ratio is "$L(u_k')>0$", then the estimated information bit $u_k'$ is judged to be 1. If the logarithmic likelihood ratio is "$L(u_k')\leq0$", then the estimated information bit $u_k'$ is judged to be 0. The received signal Lcy ($y_3$, $y_4$, ...) received at the same time is subjected to a complex decision using the third decision unit 33.

Finally, the first R/S decoder 30 and the second R/S decoder 32 conducts error check using a Reed Solomon code according to a predetermined method, and finishes the repetition processing in such a stage that the estimated precision is judged to have exceeded a specific criterion. Error correction of the estimated original transmission data is conducted by using a Reed Solomon code in each decision unit. Transmission data of a higher estimation precision is thus output.

The method of estimation of the original transmission data conducted by the first R/S decoder 30 and the second R/S decoder 32 will now be explained by referring to concrete examples. As concrete examples, three methods will be mentioned. A first method will now be -explained. For example, every time the original transmission data is estimated in the first decision unit 29 or the second decision unit 31, the first R/S decoder 30 or the second R/S decoder 32 corresponding thereto alternately conducts error check. In such a stage that either R/S decoder has judged that "there are no errors," the repetition processing using the turbo encoder is finished. And error correction of the estimated original transmission data is conducted by using a Reed Solomon code, and transmission data of a higher estimation precision is output.

A second method will now be explained. Every time the original transmission data is estimated in the first decision unit 29 or the second decision unit 31, the first R/S decoder 30 or the second R/S decoder 32 corresponding thereto alternately conducts error check. In such a stage that both R/S decoders have judged that "there are no errors, " the repetition processing using the turbo encoder is finished. And error correction of the estimated original transmission data is conducted by using a Reed Solomon code, and transmission data of a higher estimation precision is output.

A third method improves the problem of the first and second methods that false correction is conducted if repetition processing is not carried out due to a false judgment that "there are no errors." For example, after the bit error rate is reduced to some degree by carrying out repetition processing a predetermined number of times, error correction of the estimated original transmission data is conducted by using a Reed Solomon code, and transmission data of a higher estimation precision is output.

Thus, if the decoder shown in Fig. 4(b) is used, it becomes possible to accomplish reduction of soft decision processing requiring a large amount of calculation and favorable transmission characteristics, even if constellation is increased due to introduction of the multi-valued modulation technique, by providing turbo decoders which carry out the soft decision processing for two low-order bits of the received signal having a possibility of characteristic degradation and error correction using the Reed Solomon code, and a decision unit which makes a complex decision on other bits of the received signal.

Further, by estimating the transmission data by means of the first R/S decoder 30 and the second R/S decoder 32, the number of times of iteration can be reduced. Thus it becomes possible to further reduce the soft decision processing, which requires a large amount of calculation, and its processing time. It is generally known that excellent transmission characteristics are obtained on a transmission path on which random errors and burst errors mixedly exist, by jointly using an R-S code (Reed Solomon) for conducting error correction with a symbol taken as the unit or another known error correction code.

Heretofore, there have been explained basic operation of a communication apparatus in which the multicarrier modulation and demodulation technique is adopted, and operation of a communication apparatus if a turbo code is used in order to obtain favorable transmission characteristics and a high transmission rate. By referring to Fig. 1, there will hereafter be explained a communication apparatus which utilizes "a high transmission efficiency" and "function flexibility," forming features of the multicarrier modulation and demodulation technique, and which accomplishes an optimum, transmission rate, from the viewpoint of "further increase of the transmission rate." For convenience of explanation, 128 subcarriers are supposed. For example, it is assumed that 256 complex FFTs are used for demodulation of 128 subcarriers and 128 complex FFTs are used if only 64 even-numbered subcarriers are demodulated from among 128 subcarriers.

For example, if data communication using the DMT modulation and demodulation technique and 128 subcarriers is considered (see Fig. 6), each even-numbered subcarrier has the same waveform in the former half and the latter half, and a combined waveform of them also becomes the same waveform in the former half and the latter half (see Fig. 7(a)). On the other hand, each odd-numbered subcarrier has mutually inverted waveforms in the former half and the latter half, and a combined waveform of them also has mutually inverted waveforms in the former half and the latter half (see Fig. 7(b)). Fig. 6 is a diagram showing 128 subcarriers. Fig. 7 is a diagram showing waveforms of subcarriers and combined waveforms of them.

In the transmitter system of the present embodiment, half symbols are used as transmission symbols without changing the number of bits assigned to respective subcarriers by utilizing the features explained above, and the transmission rate is improved. If half symbols are used as transmission symbols, however, it becomes impossible to maintain the orthogonality of the OFDM symbols. In the present embodiment, therefore, power of even-numbered subcarriers is increased and power of odd-numbered subcarriers, which is interference components, so that demodulation may be conducted even if interference is generated. Ordinarily, when the turbo code and BPSK are used, it is said that demodulation can be conducted if the SNR is at least 1 dB. If the turbo code and QPSK are used, it is said that demodulation can be conducted if the SNR is at least 3.4 dB.

$SNR_{coded}$ shown in Fig. 6 is an SNR which satisfies, for example, $10^{-7}$, if encoding has been carried out. If $10^{-7}$ is satisfied, however, encoding may not be conducted.

On the other hand, on the receiver system, first only even-numbered subcarriers are demodulated, and then odd-numbered subcarriers are demodulated. More specifically, first the TEQ2 conducts time domain adaptive equalization processing on the digital waveform (received symbols converted to half symbols) subjected to the filtering processing and the A/D conversion processing.

Upon receiving serial data, the 128 complex FFT 3 converts the serial data to parallel data, and carries out Fourier transform on the parallel data. In other words, only 64 even-numbered subcarriers are extracted from among 128 subcarriers. Typically, full 256 complex FFT has been used in order to conduct Fourier transform on 128 subcarriers. Here, however, half of 128 complex FFT is used in order to conduct Fourier transform on even-numbered subcarriers of the received symbols converted to half symbols. Odd-numbered subcarriers cannot maintain orthogonality and they become noise.

Subsequently, the FEQ 4 conducts frequency domain adaptive equalization processing on the 64 extracted even-numbered subcarriers. The decoder 5 conducts decoding processing according to the predetermined method (see Fig. 4(b)), and reproduces the original transmission data after the decision. Data assigned to the even-numbered subcarriers is output as is.

Further, on the receiver side, the inverse FET transform section 6 conducts inverse FEQ transform on the data assigned to the even-numbered subcarriers. Subsequently, the 128 complex IFFT 7 conducts inverse fast Fourier transform on the data subjected to the inverse FEQ transform. And the inverse TEQ transform section 8 conducts inverse TEQ trans form on temporal waveforms of even-numbered subcarriers subjected to the inverse fast Fourier transform. As a result, symbols formed of only waveforms of the even-numbered subcarriers are generated (see Fig. 7(a)).

Subsequently, the subtracter 9 removes symbol components formed of only waveforms of the even-numbered subcarriers from the received symbols converted to the half symbols, and extracts symbols (half symbols) formed of only waveforms of odd-numbered subcarriers (see Fig. 7(b)). The symbol generator section 10 copies and inverts the symbol subjected to the subtraction, thereby generates a symbol, adds the generated symbol after the symbol subjected to the subtraction, using the feature of the odd-numbered subcarriers shown in Fig. 7(b), and thus generates a symbol in the state before conversion to half symbols carried out on the transmitter system.

Finally, on the receiver system, the TEQ 11 conducts time domain adaptive equalization processing on the received symbols (full symbols) of the odd-numbered subcarriers. The 256 complex FFT 12 carries out Fourier transform on parallel data subjected to the time domain adaptive equalization processing. The FEQ 13 conducts frequency domain adaptive equalization processing on the extracted 64 odd-numbered subcarriers. The decoder 14 conducts decoding processing according to the predetermined method (see Fig. 4(b)), and reproduces the original transmission data after the decision.

For example, if an error has occurred in the demodulated data, the demodulation characteristics can be improved in the present embodiment by repetitively executing processing explained hereafter. For example, the inverse FEQ transform section 15 conducts inverse FEQ transform on the data assigned to the odd-numbered subcarriers. Subsequently, the 256 complex IFFT 16 conducts inverse fast Fourier transform on the data subjected to the inverse FEQ transform. The inverse TEQ transform section 17 conducts inverse TEQ transform on the temporal waveforms of the odd-numbered subcarriers subjected to the inverse fast Fourier transform and thereby generates symbols formed of only the waveforms of the odd-numbered subcarriers (see Fig. 7(a)). The subtracter 1 removes symbol components formed of only waveforms of the odd-numbered subcarriers from the received symbols. Thereafter, the receiver system conducts demodulation processing by using the received symbols with the symbol components removed.

Thus, in the present embodiment, the communication apparatus of the transmitter side converts transmission symbols to half symbols and transmits them, and the communication apparatus of the receiver side separates even-numbered subcarriers and odd-numbered subcarriers, demodulates only received symbols of even-numbered subcarriers converted to half symbols, then removes symbol components of the even-numbered subcarriers, and thereafter demodulates only the received symbols of odd-numbered subcarriers. As a result, compression on the time axis becomes possible and the transmission capacity can be expanded to approximately twice. Further, in the present embodiment, symbols formed of only the waveforms of odd-numbered subcarriers are fed back, and the odd-numbered subcarriers, which is noise components, can be removed from the received symbols. Owing to such a configuration, the demodulation precision can be remarkably improved.

In the present embodiment, 128 subcarriers have been supposed for convenience of explanation. However, the present embodiment is not restricted thereto. In the case other than 128 subcarriers, the number in the FFT and IFFT is also altered according to the number of subcarriers.


Second Embodiment:


Fig. 8 is a diagram showing a configuration of a second embodiment of a communication apparatus according to the present invention. More specifically, Fig. 8(a) is a diagram showing a configuration of a transmitter side, and Fig. 8 (b) is a diagram showing a configuration of a receiver side. For example, in the first embodiment, the communication apparatus of the transmitter side converts transmission symbols to half symbols and transmits the half symbols, and the communication apparatus of the receiver side first demodulates only the received symbols of the even-numbered subcarriers converted to half symbols and then demodulates only the received symbols of the odd-numbered subcarriers. In other words, the transmission rate is improved by implementing conversion to half symbols. In the present embodiment, the configuration of the first embodiment is utilized, i.e., the high transmission rate is maintained. In addition, in the present embodiment, the demodulation precision is improved by using the characteristics of the known Hadamard sequence, which is an orthogonal code.

In Fig. 8(a), 61 denotes a multiplexing section which spreads transmission data by using the known Hadamard sequence, 62 an ordering section, 63 an inverse fast Fourier transform section, and 64 a D/A conversion section. In Fig. 8(b), 71 an A/D conversion section, 72 a half symbol demodulation section, 73 a deordering section, and 74 a demultiplexing section which despreads demodulated data by using the known Hadamard sequence.

Hereafter, operation of the communication apparatus having the aforementioned configuration will be explained. First, on the transmitter side, the multiplexing section 61 spreads transmission data assigned to adjacent odd-numbered subcarriers and subcarriers (such as subcarrier #1 and subcarrier #2, subcarrier #3 and subcarrier #4, ...) by using a known Hadamard sequence. An Hadamard sequence H used as the spreading code can be represented by the following equation (1),

$$H = \begin{bmatrix} 0 & 0 \\ 0 & 1 \end{bmatrix} \cdot = \begin{bmatrix} c_1 \\ c_2 \end{bmatrix}$$

$$\begin{bmatrix} s_1 \\ s_2 \end{bmatrix} = \begin{bmatrix} -1 & -1 \\ -1 & 1 \end{bmatrix}$$

$$\cdots \quad (1)$$

where $C_1$ and $C_2$ represent codes, and S1 and S2 represent signals.

For example, representing transmission data $d_k$ by $[d_{2i-1}, d_{2i}]$, the multiplexing section 61 conducts spreading as represented by the following equation (2),

$$\begin{bmatrix} x_{2i-1} \\ x_{2i} \end{bmatrix} = \frac{1}{2} \begin{bmatrix} d_{2i-1} \\ d_{2i} \end{bmatrix} \begin{bmatrix} s_1 \\ s_2 \end{bmatrix}$$

$$\cdots \quad (2)$$

where k represents n integers, i represents (n/2) integers, $[x_{2i-1}, x_{2i}]$ represents a transmission signal subjected to spreading, and 1/2 in the equation represents a coefficient for normalization.

For example, if the transmission data is $[d_1=1, d_2=-1]$, therefore, the transmission signal $[x_1, x_2]$ after spreading becomes,

$$[x_1, \ x_2] = (1[-1, \ -1] + (-1) \ [-1, \ 1])/2$$

$$= [0, \ -2]/2$$

$$= [0, \ -1]$$

For other subcarriers as well, calculation is conducted in the same way. Thus, in the present embodiment, energy of either of data assigned to the adjacent subcarriers (which correspond to, for example, subcarrier #1 and subcarrier #2, subcarrier #3 and subcarrier #4, ...) is made equal to 0 by spreading (multiplexing) the transmission data.

The ordering section 62 assigns transmission signals $x_1, x_2, x_3, x_4, ...$ after spreading calculated as explained above to respective subcarriers. More specifically, the ordering section 62 assigns 0 to subcarrier #1 and assigns -1 to subcarrier #2.

Finally, the inverse fast Fourier transform section 63 conducts inverse fast Fourier transform on data assigned to respective subcarriers. In addition, in the same way as the first embodiment, the inverse fast Fourier transform section 63 converts transmission symbols to half symbols, and transmits the generated symbols to the transmission path via the D/A conversion section 64.

On the other hand, on the receiver side, upon receiving the received symbols via the A/D conversion section 71, the half symbol demodulation section 72 demodulates the received symbols according to a procedure similar to that of the first embodiment. Since the A/D conversion section 71 has a configuration similar to Fig. 1 in the first embodiment, the same numerals are used and explanation thereof will be omitted. A demodulated signal is represented by $[y_{2i-1}, y_{2i}]$. In the half symbol demodulation section 72, energy of either of adjacent subcarriers (which correspond to, for example, subcarrier #1 and subcarrier #2, subcarrier #3 and subcarrier #4, ...) is certainly 0. Odd-numbered carriers which is noise components when demodulating even-numbered carriers are reduced. Therefore, the demodulation characteristics can be remarkably improved.

Upon receiving the demodulation signals $y_1, y_2, y_3, y_4, ...$, the deordering section 73 arranges them according to despreading unit explained later. More specifically, the deordering section 73 transmits $y_1=0, y_2=-1$ to the demultiplexing section 74 explained later. In succession, the deordering section 73 transmits $y_3, y_4, ...$ to the demultiplexing section 74.

The demultiplexing section 74 despreads the signals $y_1, y_2, y_3, y_4, ...$, which has been spread (multiplexed) on the transmitter side, by using a known Hadamard sequence, and demultiplexes them. As for the Hadamard sequence H used as the spreading code, an Hadamard sequence H similar to the equation (1) is used.

More specifically, assuming, for example, that the received data $y_k$ is $[y_{2i-1}, y_{2i}]$, the demultiplexing section 74 conducts despreading processing as represented by the following equation (3).

$$\begin{bmatrix} d_{2i-1} \\ d_{2i} \end{bmatrix} = \begin{bmatrix} y_{2i-1} \\ y_{2i} \end{bmatrix} \begin{bmatrix} s_1 \\ s_2 \end{bmatrix} \qquad \dots \ (3)$$

If, for example, the received data is $[y_1=0, y_2=-1]$, therefore, a signal after despreading, i.e., the original transmission data $[d_1, d_2]$ becomes,

$$d_1 = [0, -1] \times [-1, -1] = 1$$

$$d_2 = [0, -1] \times [-1, 1] = -1$$

As for other transmission data as well, calculation is conducted in the same way.

Thus, in the present embodiment, the transmitter side spreads (multiplexes) the transmission data. Thereby, energy of either of data assigned to the adjacent subcarriers (which correspond to, for example, subcarrier #1 and subcarrier #2, subcarrier #3 and subcarrier #4, ...) is made equal to 0. As a result, odd-numbered carriers which is noise components at the time of demodulation are reduced. Therefore, the demodulation characteristics can be remarkably improved in such a state that a high transmission rate is maintained in the same way as the first embodiment.

Further, in the present embodiment, since the demodulation characteristics can be remarkably improved as explained above, the difference between the power of the even-numbered subcarriers and the power of the odd-numbered subcarriers, i.e., the SNR can be made so as to satisfy the relation "SNR of the first embodiment>SNR of the embodiment."

As heretofore explained, according to the present invention, the transmitter side converts a transmission symbol to a half symbol and transmits it. The receiver side separates even-numbered subcarriers and odd-numbered subcarriers. The receiver side first demodulates only the received symbol of even-numbered subcarriers converted to the half symbol, then removes the symbol component of the even-numbered subcarriers, and demodulates only the received symbol of odd-numbered subcarriers, This results in an effect that it is possible to obtain such a communication apparatus that compression on the time axis becomes possible and the transmission rate can be remarkably improved.

According to the next invention, a symbol formed of only waveforms of odd-numbered subcarriers is fed back, and odd-numbered subcarriers which is noise components can be removed. This results in an effect that it is possible to obtain such a communication apparatus that the demodulation precision can be improved remarkably.

According to the next invention, the transmitter side makes energy of either of data assigned to a (2i-1)th subcarrier and a 2ith subcarrier which are adjacent to each other equal to 0 by spreading (multiplexing) the transmission data. Accordingly, odd-numbered carriers which is noise components at the time of demodulation are reduced. This results in an effect that it is possible to obtain such a communication apparatus that the demodulation characteristics can be improved remarkably in such a state that a high transmission rate is maintained.

According to the next invention, transmission symbols are converted to half symbols and transmitted. This results in an effect that it is possible to obtain such a transmitter that the transmission rate can be improved remarkably.

According to the next invention, energy of either of data assigned to a (2i-1) th subcarrier and a 2ith subcarrier which are adjacent to each other is made equal to 0. Noise components at the time of demodulation are thus reduced. This results in an effect that it is possible to obtain such a transmitter that the demodulation characteristics can be improved remarkably.

According to the next invention, even-numbered subcarriers and odd-numbered subcarriers are separated. First, only the received symbol of even-numbered subcarriers converted to the half symbol is demodulated, then the symbol component of the even-numbered subcarriers is removed, and only the received symbol of odd-numbered subcarriers is demodulated, This results in an effect that it is possible to obtain such a receiver that the transmission rate can be remarkably improved.

According to the next invention, a symbol formed of only waveforms of odd-numbered subcarriers is fed back, and odd-numbered subcarriers which is noise components can be removed. This results in an effect that it is possible to obtain such a receiver that the demodulation precision can be improved remarkably.

According to the next invention, odd-numbered carriers which is noise components at the time of demodulation are reduced. This results in an effect that it is possible to obtain such a receiver the demodulation characteristics can be improved remarkably in such a state that a high transmission rate is maintained.

According to the next invention, the transmitter side converts a transmission symbol to a half symbol and transmits it. The receiver side separates even-numbered subcarriers and odd-numbered subcarriers. The receiver side first demodulates only the received symbol of even-numbered subcarriers converted to the half symbol, then removes the symbol component of the even-numbered subcarriers, and demodulates only the received symbol of odd-numbered subcarriers. This results in an effect that it is possible to obtain such a communication method that compression on the time axis becomes possible and the transmission rate can be remarkably improved.

According to the next invention, a symbol formed of only waveforms of odd-numbered subcarriers is fed back, and odd-numbered subcarriers which is noise components can be removed. This results in an effect that it is possible to obtain such a communication method that the demodulation precision can be improved remarkably.

According to the next invention, the transmitter side makes energy of either of data assigned to a (2i-1)th subcarrier and a 2ith subcarrier which are adjacent to each other equal to 0 by spreading (multiplexing) the transmission data. Accordingly, odd-numbered carriers which is noise components at the time of demodulation are reduced. This results in an effect that it is possible to obtain such a communication method that the demodulation characteristics can be improved remarkably in such a state that a high transmission rate is maintained.

INDUSTRIAL APPLICABILITY

As heretofore described, the communication apparatus and the communication method are useful to data communication using existing communication lines by means of the DMT (Discrete Multi Tone) modulation and demodulation technique and OFDM (Orthogonal Frequency Division Multiplex) modulation and demodulation technique. The communication apparatus and the communication method are suitable not only for communication apparatuses which conduct data communication by using the DMT modulation and demodulation technique, but also for every communication which conducts wire communication and radio communication via an ordinary communication line by using a multicarrier modulation and demodulation technique and a single carrier modulation and demodulation technique.

**Claims**

1. A communication apparatus which adopts a multicarrier modulation and demodulation technique, said communication apparatus comprising:

   a transmitter unit which converts a transmission symbol to a half symbol and conducts communication in such a state that a predetermined power difference is given between even-numbered subcarriers and odd-numbered subcarriers which is interference components at time of demodulation, and
   a receiver unit which conducts predetermined Fourier transform to extract even-numbered subcarriers on a received symbol converted to the half symbol, and demodulates data assigned to the subcarriers,
   which, on the other hand, conducts inverse Fourier transform on the data assigned to the even-numbered subcarriers, and generates a first symbol formed of temporal waveforms of the even-numbered subcarriers, which subsequently removes the first symbol component from the received symbol, generates a second symbol formed of temporal waveforms of odd-numbered subcarriers, and generates a third symbol by adding a symbol obtained by copying and inverting the second symbol, after the second symbol, and
   which finally conducts predetermined Fourier transform to extract odd-numbered subcarriers on the third symbol, and demodulates data assigned to the subcarriers.

2. The communication apparatus according to claim 1, wherein the receiver unit conducts inverse Fourier transform on data assigned to the odd-numbered subcarriers, generates a fourth symbol formed of temporal waveforms of odd-numbered subcarriers, then removes the fourth symbol component from the received symbol, and thereafter conducts demodulation processing by using the received symbol with the fourth symbol component removed.

3. The communication apparatus according to claim 1 or 2, wherein
   the transmitter unit spreads (multiplexes) transmission data assigned to a (2i-1)th subcarrier and a 2ith subcarrier which are adjacent to each other, with a predetermined spreading code, conducts inverse Fourier transform on the signal subjected to the spreading, and thereby generates the transmission symbol, and
   the receiver unit despreads (demultiplexes) the demodulated data with the spreading code, and reproduces original transmission data assigned to the (2i-1)th subcarrier and the 2ith subcarrier which are adjacent to each other.

4. A communication apparatus functioning as a transmitter which adopts a multicarrier modulation and demodulation technique, said communication apparatus comprising:

a transmitter unit which converts a transmission symbol to a half symbol and conducts communication in such a state that a predetermined power difference is given between even-numbered subcarriers and odd-numbered subcarriers which is interference components at time of demodulation.

5. The communication apparatus according to claim 4, further comprising a multiplexing unit which spreads (multiplexes) transmission data assigned to a (2i-1)th subcarrier and a 2ith subcarrier which are adjacent to each other, with a predetermined spreading code,
    wherein the transmitter unit conducts inverse Fourier transform on the signal subjected to the spreading, and thereby generates the transmission symbol.

6. A communication apparatus functioning as a receiver which adopts a multicarrier modulation and demodulation technique, said communication apparatus comprising:

a first demodulation unit which conducts predetermined Fourier transform to extract even-numbered subcarriers on a received symbol converted to the half symbol, and demodulates data assigned to the subcarriers,
a first symbol generation unit which conducts inverse Fourier transform on the data assigned to the even-numbered subcarriers, and generates a first symbol formed of temporal waveforms of the even-numbered subcarriers,
a second symbol generation unit which removes the first symbol component from the received symbol, and generates a second symbol formed of temporal waveforms of odd-numbered subcarriers,
a third symbol generation unit which generates a third symbol by adding a symbol obtained by copying and inverting the second symbol, after the second symbol, and
a second demodulation unit which conducts predetermined Fourier transform to extract odd-numbered subcarriers on the third symbol, and demodulates data assigned to the subcarriers.

7. The communication apparatus according to claim 6, further comprising:

a fourth symbol generation unit which conducts inverse Fourier transform on data assigned to the odd-numbered subcarriers, and generates a fourth symbol formed of temporal waveforms of odd-numbered subcarriers, and
a removal unit which removes the fourth symbol component from the received symbol,

    wherein thereafter demodulation processing is conducted by using the received symbol with the fourth symbol component removed.

8. The communication apparatus according to claim 6, further comprising:

a demultiplexing unit which despreads (demultiplexes) the demodulated data, and reproduces original transmission data assigned to the (2i-1)th subcarrier and the 2ith subcarrier which are adjacent to each other.

9. A communication method which adopts a multicarrier modulation and demodulation technique, the communication method comprising:

a transmission step which converts a transmission symbol to a half symbol and conducts communication in such a state that a predetermined power difference is given between even-numbered subcarriers and odd-numbered subcarriers which is interference components at time of demodulation,
a first demodulation step which conducts predetermined Fourier transform to extract even-numbered subcarriers on a received symbol converted to the half symbol, and demodulates data assigned to the subcarriers,
a first symbol generation step which conducts inverse Fourier transform on the data assigned to the even-numbered subcarriers, and generates a first symbol formed of temporal waveforms of the even-numbered subcarriers,
a second symbol generation step which removes the first symbol component from the received symbol, and generates a second symbol formed of temporal waveforms of odd-numbered subcarriers,

a third symbol generation step which generates a third symbol by adding a symbol obtained by copying and inverting the second symbol, after the second symbol, and
a second demodulation unit which conducts predetermined Fourier transform to extract odd-numbered subcarriers on the third symbol, and demodulates data assigned to the subcarriers.

**10.** The communication method according to claim 9, further comprising:

a fourth symbol generation unit which conducts inverse Fourier transform on data assigned to the odd-numbered subcarriers, and generates a fourth symbol formed of temporal waveforms of odd-numbered subcarriers, and
a removal step which removes the fourth symbol component from the received symbol,

wherein thereafter demodulation processing is conducted by using the received symbol with the fourth symbol component removed.

**11.** The communication method according to claim 9, further comprising:

a multiplexing step which spreads (multiplexes) transmission data assigned to a (2i-1)th subcarrier and a 2ith subcarrier which are adjacent to each other, with a predetermined spreading code, conducts inverse Fourier transform on the signal subjected to the spreading, and thereby generates the transmission symbol, and
a demultiplexing step which despreads (demultiplexes) the demodulated data with the spreading code, and reproduces original transmission data assigned to the (2i-1)th subcarrier and the 2ith subcarrier which are adjacent to each other.

# FIG.1

EVEN-NUMBERED TONE OUTPUT

ODD-NUMBERED TONE OUTPUT

- 17 INVERSE TEQ TRANSFORM SECTION
- 16 INVERSE FAST FOURIER TRANSFORM SECTION (256 COMPLEX IFFT)
- 15 INVERSE FEQ TRANSFORM SECTION
- A/D CONVERSION OUTPUT
- 1
- 2 TIME DOMAIN EQUALIZER SECTION (TEQ)
- 3 FAST FOURIER TRANSFORM SECTION (128 COMPLEX FFT)
- 4 FREQUENCY DOMAIN EQUALIZER SECTION (FEQ)
- 5 DECODER
- 14 DECODER
- 6 INVERSE FEQ TRANSFORM SECTION
- 13 FEQ
- 7 INVERSE FAST FOURIER TRANSFORM SECTION (128 COMPLEX IFFT)
- 12 FAST FOURIER TRANSFORM SECTION (256 COMPLEX FFT)
- 8 INVERSE TEQ TRANSFORM SECTION
- 11 TEQ
- 9
- 10 SYMBOL GENERATION SECTION

EP 1 211 836 A1

# FIG.2

# FIG.3

ANALOG
PROCESSING AND
ADC
141

RECEIVED
SIGNAL

TEQ
142

TONE
ORDERING
147

CONSTE-
LLATION
DECODER
AND
GAIN
SCALLING
146

FEQ
145

FFT
144

INPUT
SERIAL/
PARALLEL
BUFFER
143

RATE-
CONVERTOR
148

RATE-
CONVERTOR
149

MUX/SYNC
CONTROL
155

CRC
153

DESCRAM&FEC
151

CRC
154

DESCRAM&FEC
152

DEINTERLEAVE
150

# FIG.4

(a)

$U_4$ ——————————————————→ $U_4$

$U_3$ ——————————————————→ $U_3$

$U_2$ ———→ ┌──────────┐ —————————→ $U_2$

$U_1$ ———→ │  TURBO   │ —————————→ $U_1$
          │ ENCODER  │ —————————→ $U_a$
          │          │ —————————→ $U_b$
          └──────────┘
               $21$

(b)

┌─────────────────────────────────────────┐
│           THIRD DECISION UNIT            │ →
└─────────────────────────────────────────┘
                                        $33$

Lcy
 ‖
$(y_3, y_4, \cdots)$

$L_a(u_k)=0$ →  switch  → ┌─────┐ $L(u'_k)$  $-Le(u_k)$  ┌─────────┐  ┌─────────┐ $L(u'_k)$  $-Le(u_k)$  ┌──────────┐
         A               │FIRST│  ⊕         →           │ INTER-  │  │ SECOND  │  ⊕         →           │ DEINTER- │
  intial:A               │DECO-│  $+$ $-$                │ LEAVER  │  │ DECODER │  $+$ $-$                │  LEAVER  │
after second:B           │DER  │         $23$            │   $24$  │  │   $26$  │         $27$            │   $28$   │
                         │ $22$│                         │$La(u_k)$│  │         │                        └──────────┘
Lcy                      └─────┘                         └─────────┘  └─────────┘
 ‖                                                       ┌─────────┐
$(y_1, y_2, y_a, y_b)$                                   │ INTER-  │
                                                         │ LEAVER  │
                                                         │   $25$  │
                                                         └─────────┘

                    ┌──────────┐  ┌──────────┐              ┌──────────┐  ┌──────────┐
                    │  FIRST   │  │ FIRST R/S│              │  SECOND  │  │  SECOND  │
                    │ DECISION │  │ DECODER  │              │ DECISION │  │   R/S    │
                    │   UNIT   │  │          │              │   UNIT   │  │ DECODER  │
                    │   $29$   │  │   $30$   │              │   $31$   │  │   $32$   │
                    └──────────┘  └──────────┘              └──────────┘  └──────────┘

# FIG.5

$U_2$                          $U_2$

$U_1$                          $U_1$

35

FIRST RECURSIVE
SYSTEMATIC
CONVOLUTIONAL ENCODER     $U_a$

36   t    t   37

$U_{1t}$

38

SECOND RECURSIVE
SYSTEMATIC
CONVOLUTIONAL ENCODER     $U_b$

$U_{2t}$

# FIG.6

#1  #2  #3  #4  #5  #6  #7  #8  #9  #10

SNR$_{coded}$

. . . . . . . . . . .

EP 1 211 836 A1

# FIG.7

(a)

FORMER HALF | LATTER HALF

SUBCARRIER #2

SUBCARRIER #4

COMBINED WAVEFORM #2 AND #4

T
(CONVERSION TO HALF SYMBOL)

(b)

FORMER HALF | LATTER HALF

SUBCARRIER #1

SUBCARRIER #3

COMBINED WAVEFORM #1 AND #3

T
(CONVERSION TO HALF SYMBOL)

# FIG.8

EP 1 211 836 A1

(a)

$dk$
$(k=1.2\cdots n)$ → | MULTIPLEXING SECTION (61) | → | ORDERING SECTION (62) | → | INVERSE FAST FOURIER TRANSFORM SECTION (63) | → | D/A CONVERSION SECTION (64) | → TO TRANSMISSION LINE

(b)

TRANSMISSION LINE → | A/D CONVERSION SECTION (71) | → | HALF SYMBOL DEMODULATION SECTION (72) | → | DEORDERING SECTION (73) | → | DEMULTIPLEXING SECTION (74) | →

## INTERNATIONAL SEARCH REPORT

| | International application No. |
|---|---|
| | PCT/JP01/07066 |

**A. CLASSIFICATION OF SUBJECT MATTER**
Int.Cl$^7$ H04J11/00

According to International Patent Classification (IPC) or to both national classification and IPC

**B. FIELDS SEARCHED**

Minimum documentation searched (classification system followed by classification symbols)
Int.Cl$^7$ H04J11/00

Documentation searched other than minimum documentation to the extent that such documents are included in the fields searched
Jitsuyo Shinan Koho 1926-2000
Kokai Jitsuyo Shinan Koho 1971-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 8-97798 A (Nippon Columbia Co., Ltd.), 12 April, 1996 (12.04.96), Figs. 1, 4 (Family: none) | 1-11 |
| E,A | JP 2001-36494 A (Mitsubishi Electric Corporation), 09 February, 2001 (09.02.01), Fig. 5 (Family: none) | 1-11 |
| P,X | Wataru MATSUMOTO, et al., "Multi-Carrier CDMA no Half Symbol Henfuku Chouhou ni kansuru Ichi Kentou", Denshi Joho Tsuushin Gakkai Gijutsu Kenkyu Houkokku, Vol.100, No.514, Shadan Houjin Denshi Joho Tsuushin Gakkai, 16 December, 2000 (16.12.00), pp.1-6 | 1-11 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19 September, 2001 (19.09.01) | 02 October, 2001 (02.10.01) |

| Name and mailing address of the ISA/<br>Japanese Patent Office | Authorized officer |
|---|---|
| Facsimile No. | Telephone No. |

Form PCT/ISA/210 (second sheet) (July 1992)

23